# EUROPEAN PATENT SPECIFICATION

(11) **EP 2 984 862 B1**
(45) Date of publication and mention of the grant of the patent: **17.10.2018**
(21) Application number: 14782589.7
(22) Date of filing: 09.04.2014
(51) Int. Cl.: H04W 24/00, H04J 11/00

(54) **DEVICE-TO-DEVICE MEASUREMENT FOR INTERFERENCE MITIGATION CROSS-REFERENCE TO RELATED APPLICATIONS**
MESSUNG ZWISCHEN ZWEI VORRICHTUNGEN ZUR INTERFERENZABSCHWÄCHUNG
MESURE DE DISPOSITIF À DISPOSITIF POUR L'ATTÉNUATION DES INTERFÉRENCES EN CORRESPONDANCE AUX APPLICATIONS PERTINENTES

(30) Priority: 09.04.2013 WO PCT/CN2013/073969
(43) Date of publication of application: 17.02.2016
(73) Proprietor: Qualcomm Incorporated, San Diego, CA 92121-1714 (US)
(72) Inventor: FENG, Minghai, San Diego, California 92121-1714 (US); WANG, Neng, San Diego, California 92121-1714 (US); WEI, Chao, San Diego, California 92121-1714 (US); HOU, Jilei, San Diego, California 92121-1714 (US)
(74) Representative: Wegner, Hans
(86) International application number: PCT/CN2014/074963
(87) International publication number: WO 2014/166384

(56) References cited:
- WO-A1-2012/019327
- WO-A1-2012/167431
- WO-A1-2013/014169
- WO-A2-2012/128545
- CN-A- 101 795 473
- CN-A- 102 457 367
- CN-A- 102 611 525
- US-A1- 2012 307 689

## Description

### BACKGROUND

### Field

The present disclosure relates generally to communication systems, and more particularly, to methods and apparatus for mitigating interference.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency divisional multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE/LTE-Advanced is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

WO 2012/167431 A1 discloses measures for interference control in time division duplex communication. Such measures may exemplary comprise setting up a predefined uplink-downlink configuration of a frame structure for time division duplex communication, said frame structure comprising a predefined number of downlink subframes, deriving measurement groups from the frame structure according to a measurement configuration, said measurement configuration defining a set of all downlink subframes of the frame structure or at least two subsets of the downlink subframes of the frame structure, each of said measurement groups comprising a set of subframes out of the downlink subframes of the frame structure, and performing an interference measurement for the downlink subframes of at least one of the measurement groups.

### SUMMARY

The invention is defined by the independent claims.

In particular claim 1 relates to a method for wireless communication by a base station, claim 5 relates to a method for wireless communication by a user equipment, claim 9 relates to an apparatus for wireless communication by a base station, claim 13 relates to an apparatus for wireless communication by a user equipment and claim 15 relates to a computer program.

### BRIEF DESCRIPTION OF THE DRAWINGS

FIG. 1 is a diagram illustrating an example of a network architecture.
FIG. 2 is a diagram illustrating an example of an access network.
FIG. 3 is a diagram illustrating an example of a DL frame structure in LTE.
FIG. 4 is a diagram illustrating an example of an UL frame structure in LTE.
FIG. 5 is a diagram illustrating an example of a radio protocol architecture for the user and control plane.
FIG. 6 is a diagram illustrating an example of an evolved Node B and user equipment in an access network, in accordance with certain aspects of the disclosure.
FIG. 7 illustrates how different subframe configurations may be used, in accordance with certain aspects of the present disclosure.
FIG. 8 illustrates different types of interference that may be mitigated, in accordance with certain aspects of the present disclosure.
FIG. 9 illustrates different types of SSF configurations that may be used to help measure interference, in accordance with certain aspects of the present disclosure.
FIG. 10 illustrates one example of how different SSF configurations may be used, in accordance with certain aspects of the present disclosure.
FIG. 11 illustrates example operations 1100 performed by a base station (BS), in accordance with certain aspects of the present disclosure.
FIG. 12 illustrates example operations 1200 performed by a base station (BS), in accordance with certain aspects of the present disclosure.
FIG. 13 illustrates example operations 1300 performed by a user equipment (UE), in accordance with certain aspects of the present disclosure.

### DETAILED DESCRIPTION

Aspects of the present disclosure may help mitigate interference caused by one base station to another base station (eNB-eNB interference) and/or interference caused by one user equipment to another user equipment (UE-UE interference). Such techniques may make use of carefully selected special subframe (SSF) configurations to allow eNB-eNB and/or UE-UE interference measurements.

### EXAMPLE WIRELESS COMMUNICATION SYSTEM

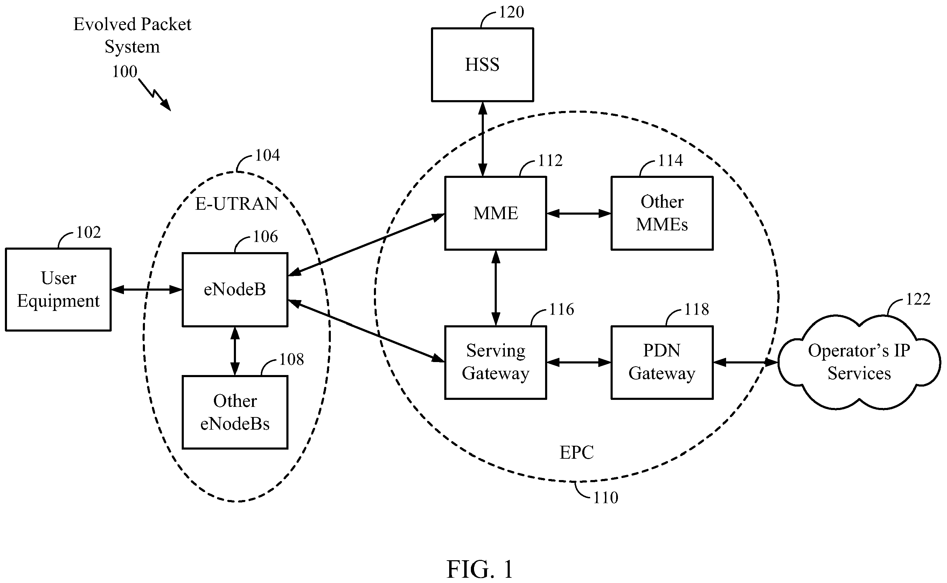

FIG. 1 is a diagram illustrating an LTE network architecture 100 in which aspects of the present disclosure may be utilized.

The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, a Home Subscriber Server (HSS) 120, and an Operator's Internet Protocol (IP) Services 122. The EPS can interconnect with other access networks, but for simplicity those entities/interfaces are not shown. Exemplary other access networks may include an IP Multimedia Subsystem (IMS) Packet Data Network (PDN), Internet PDN, Administrative PDN (e.g., Provisioning PDN), carrier-specific PDN, operator-specific PDN, and/or GPS PDN. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 106 and other eNBs 108. The eNB 106 provides user and control plane protocol terminations toward the UE 102. The eNB 106 may be connected to the other eNBs 108 via an X2 interface (e.g., backhaul). The eNB 106 may also be referred to as a base station, a base transceiver station, a radio base station, a radio transceiver, a transceiver function, a basic service set (BSS), an extended service set (ESS), or some other suitable terminology. The eNB 106 provides an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a netbook, a smart book, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected by an S1 interface to the EPC 110. The EPC 110 includes a Mobility Management Entity (MME) 112, other MMEs 114, a Serving Gateway 116, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 is connected to the Operator's IP Services 122. The Operator's IP Services 122 may include, for example, the Internet, the Intranet, an IP Multimedia Subsystem (IMS), and a PS Streaming Service (PSS). In this manner, the UE102 may be coupled to the PDN through the LTE network.

Aspects of the present disclosure may be utilized to mitigate interference caused by devices of the same type. For example, such aspects may be used to mitigate eNB-eNB interference, for example, caused by downlink transmissions of eNB 106 to downlink transmissions of one or more other eNBs 108. Similarly, such aspects may be used to mitigate UE-UE interference, for example, caused by uplink transmissions of UE 102 to uplink transmissions of one or more other UEs.

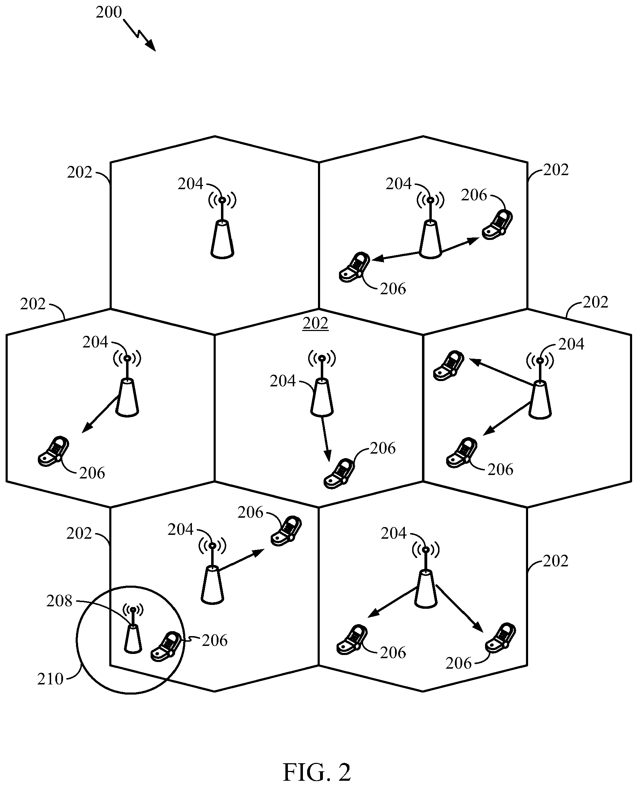

FIG. 2 is a diagram illustrating an example of an access network 200 in an LTE network architecture. In this example, the access network 200 is divided into a number of cellular regions (cells) 202. One or more lower power class eNBs 208 may have cellular regions 210 that overlap with one or more of the cells 202. A lower power class eNB 208 may be referred to as a remote radio head (RRH). The lower power class eNB 208 may be a femto cell (e.g., home eNB (HeNB)), pico cell, or micro cell.

The techniques presented herein may be applied to mitigate interference between eNBs of the same type or different types. The techniques presented herein may also be applied to mitigate interference between UEs served by eNBs of the same type or by eNBs of different types.

The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116.

The modulation and multiple access scheme employed by the access network 200 may vary depending on the particular telecommunications standard being deployed. In LTE applications, OFDM is used on the DL and SC-FDMA is used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (e.g., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

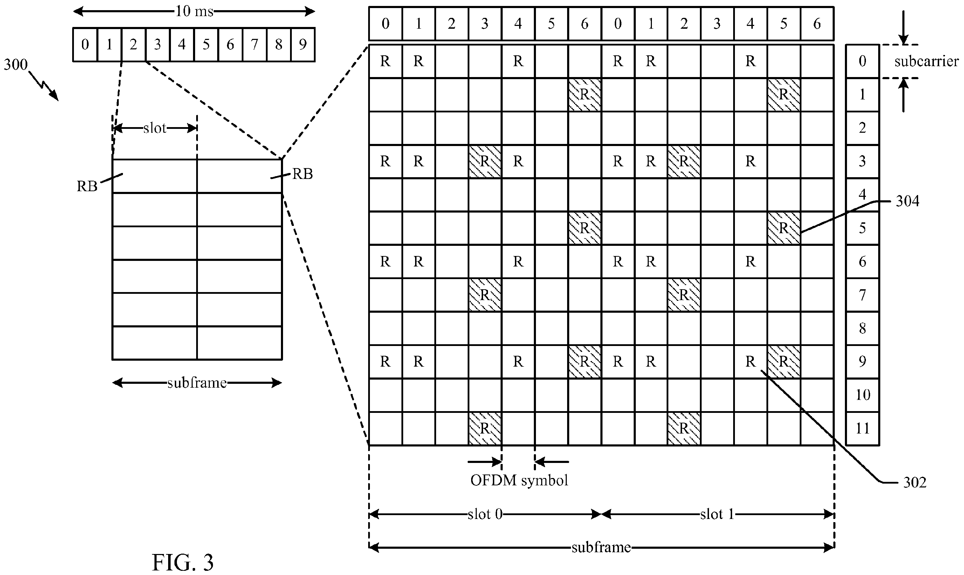

FIG. 3 is a diagram 300 illustrating an example of a DL frame structure in LTE. A frame (10 ms) may be divided into 10 equally sized sub-frames with indices of 0 through 9. Each sub-frame may include two consecutive time slots. A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. For an extended cyclic prefix, a resource block contains 6 consecutive OFDM symbols in the time domain and has 72 resource elements. Some of the resource elements, as indicated as R 302, 304, include DL reference signals (DL-RS). The DL-RS include Cell-specific RS (CRS) (also sometimes called common RS) 302 and UE-specific RS (UE-RS) 304. UE-RS 304 are transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

In LTE, an eNB may send a primary synchronization signal (PSS) and a secondary synchronization signal (SSS) for each cell in the eNB. The primary and secondary synchronization signals may be sent in symbol periods 6 and 5, respectively, in each of subframes 0 and 5 of each radio frame with the normal cyclic prefix (CP). The synchronization signals may be used by UEs for cell detection and acquisition. The eNB may send a Physical Broadcast Channel (PBCH) in symbol periods 0 to 3 in slot 1 of subframe 0. The PBCH may carry certain system information.

The eNB may send a Physical Control Format Indicator Channel (PCFICH) in the first symbol period of each subframe. The PCFICH may convey the number of symbol periods (M) used for control channels, where M may be equal to 1, 2 or 3 and may change from subframe to subframe. M may also be equal to 4 for a small system bandwidth, e.g., with less than 10 resource blocks. The eNB may send a Physical HARQ Indicator Channel (PHICH) and a Physical Downlink Control Channel (PDCCH) in the first M symbol periods of each subframe. The PHICH may carry information to support hybrid automatic repeat request (HARQ). The PDCCH may carry information on resource allocation for UEs and control information for downlink channels. The eNB may send a Physical Downlink Shared Channel (PDSCH) in the remaining symbol periods of each subframe. The PDSCH may carry data for UEs scheduled for data transmission on the downlink.

The eNB may send the PSS, SSS, and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH, and PHICH in a broadcast manner to all UEs, may send the PDCCH in a unicast manner to specific UEs, and may also send the PDSCH in a unicast manner to specific UEs.

A number of resource elements may be available in each symbol period. Each resource element (RE) may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1, and 2. The PDCCH may occupy 9, 18, 36, or 72 REGs, which may be selected from the available REGs, in the first M symbol periods, for example. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

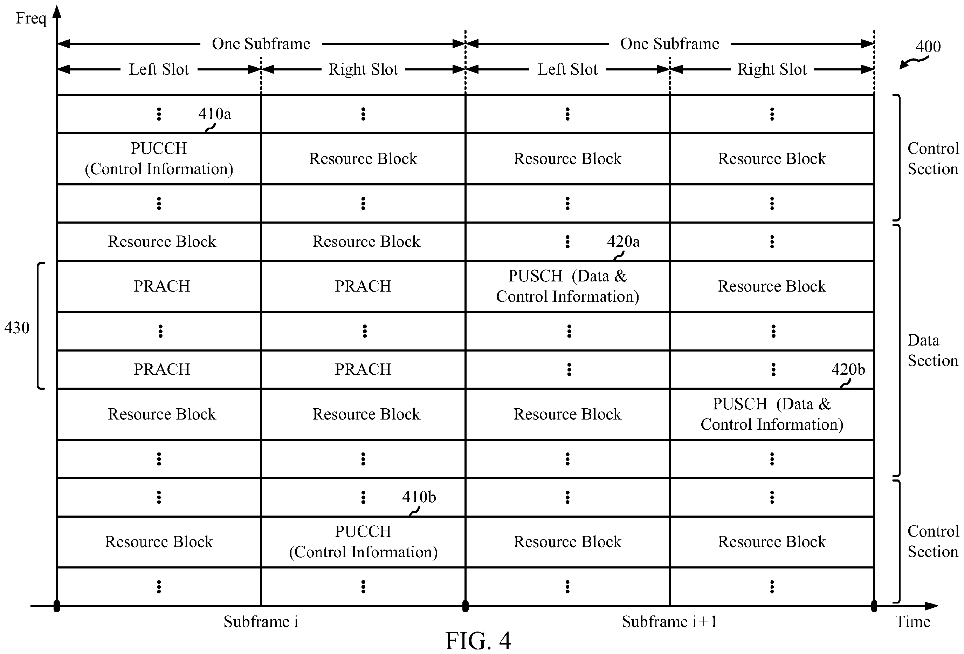

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous sub frames and a UE can make only a single PRACH attempt per frame (10 ms).

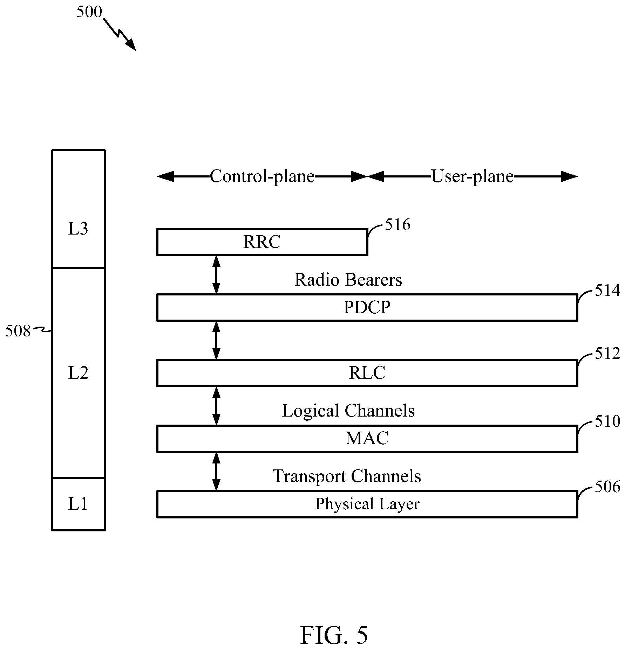

FIG. 5 is a diagram 500 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNBs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNB is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (i.e., radio bearers) and for configuring the lower layers using RRC signaling between the eNB and the UE.

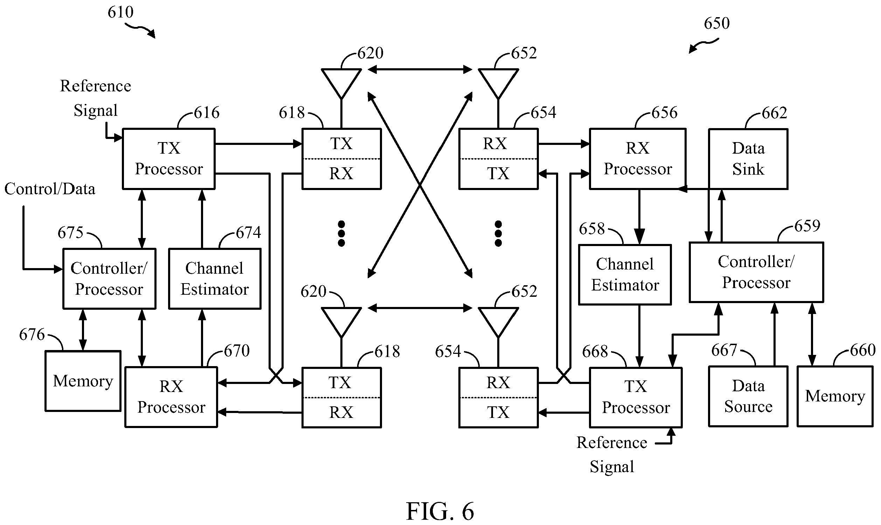

FIG. 6 is a block diagram of an eNB 610 in communication with a UE 650 in an access network. In the DL, upper layer packets from the core network are provided to a controller/processor 675. The controller/processor 675 implements the functionality of the L2 layer. In the DL, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The TX processor 616 implements various signal processing functions for the L1 layer (i.e., physical layer). The signal processing functions includes coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream is then provided to a different antenna 620 via a separate transmitter 618TX. Each transmitter 618TX modulates an RF carrier with a respective spatial stream for transmission.

At the UE 650, each receiver 654RX receives a signal through its respective antenna 652. Each receiver 654RX recovers information modulated onto an RF carrier and provides the information to the receiver (RX) processor 656. The RX processor 656 implements various signal processing functions of the L1 layer. The RX processor 656 performs spatial processing on the information to recover any spatial streams destined for the UE 650. If multiple spatial streams are destined for the UE 650, they may be combined by the RX processor 656 into a single OFDM symbol stream. The RX processor 656 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNB 610. These soft decisions may be based on channel estimates computed by the channel estimator 658. The soft decisions are then decoded and deinterleaved to recover the data and control signals that were originally transmitted by the eNB 610 on the physical channel. The data and control signals are then provided to the controller/processor 659.

The controller/processor 659 implements the L2 layer. The controller/processor can be associated with a memory 660 that stores program codes and data. The memory 660 may be referred to as a computer-readable medium. In the UL, the control/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the UL, a data source 667 is used to provide upper layer packets to the controller/processor 659. The data source 667 represents all protocol layers above the L2 layer. Similar to the functionality described in connection with the DL transmission by the eNB 610, the controller/processor 659 implements the L2 layer for the user plane and the control plane by providing header compression, ciphering, packet segmentation and reordering, and multiplexing between logical and transport channels based on radio resource allocations by the eNB 610. The controller/processor 659 is also responsible for HARQ operations, retransmission of lost packets, and signaling to the eNB 610.

Channel estimates derived by a channel estimator 658 from a reference signal or feedback transmitted by the eNB 610 may be used by the TX processor 668 to select the appropriate coding and modulation schemes, and to facilitate spatial processing. The spatial streams generated by the TX processor 668 are provided to different antenna 652 via separate transmitters 654TX. Each transmitter 654TX modulates an RF carrier with a respective spatial stream for transmission.

The UL transmission is processed at the eNB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer.

The controller/processor 675 implements the L2 layer. The controller/processor 675 can be associated with a memory 676 that stores program codes and data. The memory 676 may be referred to as a computer-readable medium. In the UL, the control/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations.

### EXAMPLE INTERFERENCE MITIGATION

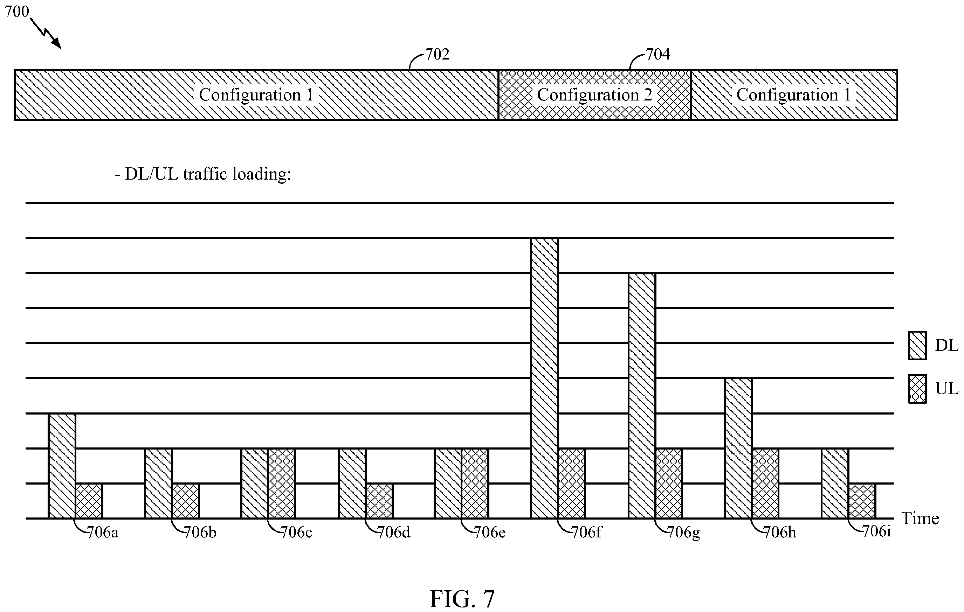

Flexible DL/UL configuration is generally regarded as one efficient way to fully utilize TDD spectrum and is being addressed in 3GPP enhanced interference mitigation and traffic adaptation (eIMTA) SI/WI. FIG. 7 illustrates how different subframe configurations (Configuration 1 (702) and Configuration 2 (704)) may be used at different times, depending on DL/UL traffic loading. Over time, as uplink and downlink traffic loading 706 changes, subframe configurations may change to accommodate the changes in uplink and downlink traffic changes. For example, in a point of time, uplink and downlink traffic loading may be roughly equivalent, as illustrated in loading 706e. At 706f, the uplink and downlink loading may change to have predominantly uplink data, and the subframe configuration may be changed to accommodate these changes in traffic. Likewise, in moving, for example, from loading 706c (a roughly equivalent loading) to loading 706d (having a higher uplink loading than downlink loading), the subframe configuration may be changed to reflect the decreased uplink loading.

Such techniques may be used in cases where there may be eNB-eNB or UE-UE interference when adjacent cells are performing operations in different directions (e.g., one cell having downlink activity while a neighbor cell has uplink activity, or vice versa). In order to mitigate the interference from one eNB to another eNB or from one UE to another UE, many solutions have been discussed, including cell cluster IM (CCIM), scheduling dependent IM (SDIM), interference mitigation based on enhanced inter-cell interference coordination (eICIC) and/or further enhanced inter-cell interference cancellation (FeICIC) schemes and interference suppressing interference mitigation (ISIM).

Most of such solutions depend on eNB or UE measurement of the interference. However, in the current specification, eNB-eNB and UE-UE measurement is not supported, so a new design is needed for eNB-eNB and UE-UE measurement if eNB-eNB and/or UE-UE interference is to be mitigated.

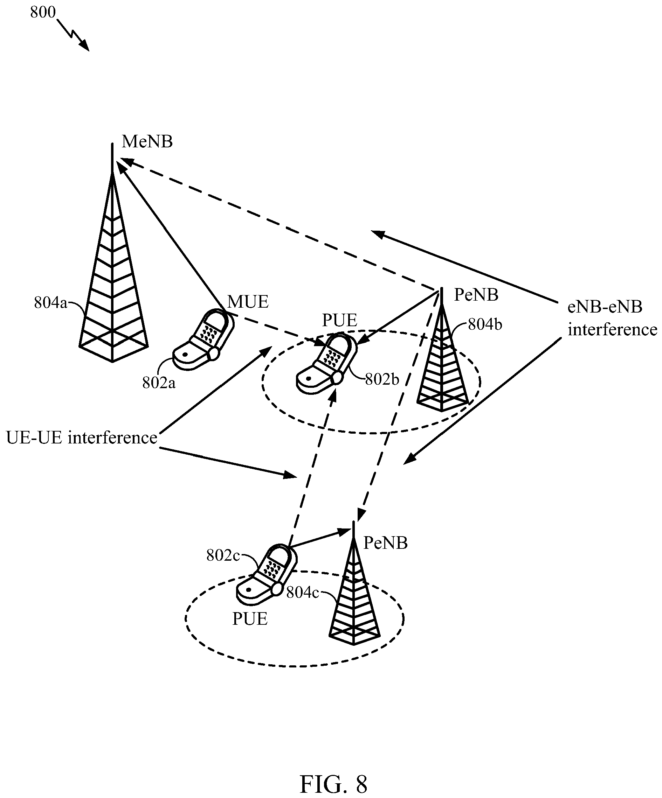

FIG. 8 illustrates example DL-UL interference when adjacent cells have transmissions in different directions, including eNB-eNB interference and UE-UE interference. As illustrated, a network 800 may have one or more UEs 802 and one or more eNBs 804. UEs 802 may correspond one or more of the UEs 206 illustrated in FIG. 2, and eNBs 804 may correspond to one or more of the eNBs 204 or femto eNBs 208 illustrated in FIG. 2. In this illustration, UE 802b, which may be receiving data on a downlink from eNB 804b, may experience UE-UE interference from UEs 802a and 802c, which may be transmitting data to another eNB on the uplink. Likewise, eNB 804b, transmitting data on the downlink may cause eNB-eNB interference to eNBs 804a and 804c, which may be receiving data on an uplink from UEs 802a and 802c, respectively.

Aspects of the present disclosure may help mitigate interference caused by one base station to another base station (eNB-eNB interference) and/or interference caused by one user equipment to another user equipment (UE-UE interference), such as that illustrated in FIG. 8. Such techniques may make use of carefully selected special subframe (SSF) configurations to allow eNB-eNB and/or UE-UE interference measurements.

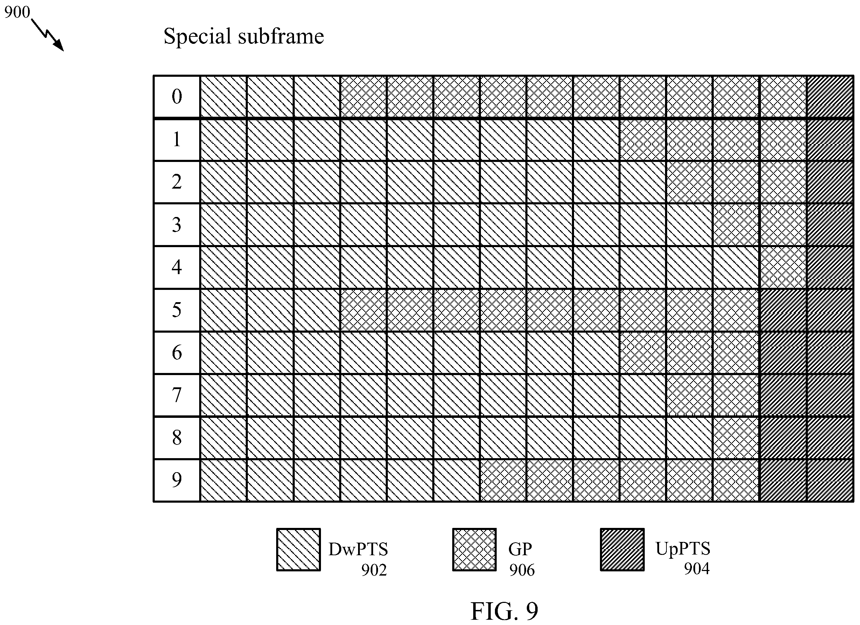

FIG. 9 illustrates example SSF configurations 900 and how they differ in downlink portions (with downlink pilot time slots DwPTS (902)), uplink portions (with uplink pilot time slots UpPTS (904)), and guard periods (GPs (906)).

Techniques presented herein may mitigate interference between devices by selecting different SSF configurations for use by one or more devices to allow for the measurement of eNB-eNB or UE-UE interference, as described in greater detail below.

One example technique may utilize different special sub-frame (SSF) configurations in neighbor cells and measure in guard periods (GP). In some cases, out of a total number of SSF configurations, a group of configurations may be selected to be used for the cells having to measure eNB-eNB interference. One option is to select a short DwPTS configuration (e.g., an SSF configuration having relatively short DwPTSs 902, such as configurations 0/5) for one of the cells, and select a long DwPTS configuration (e.g., an SSF configuration having a relatively large DwPTSs 902, such as configurations 1/2/3/4/6/7/8) for all the other cells. Another option is to select a long DwPTS configuration (e.g., configurations 1/2/3/4/6/7/8) for one of the cells, and select a short DwPTS configuration (e.g., configurations 0/5) for all the other cells.

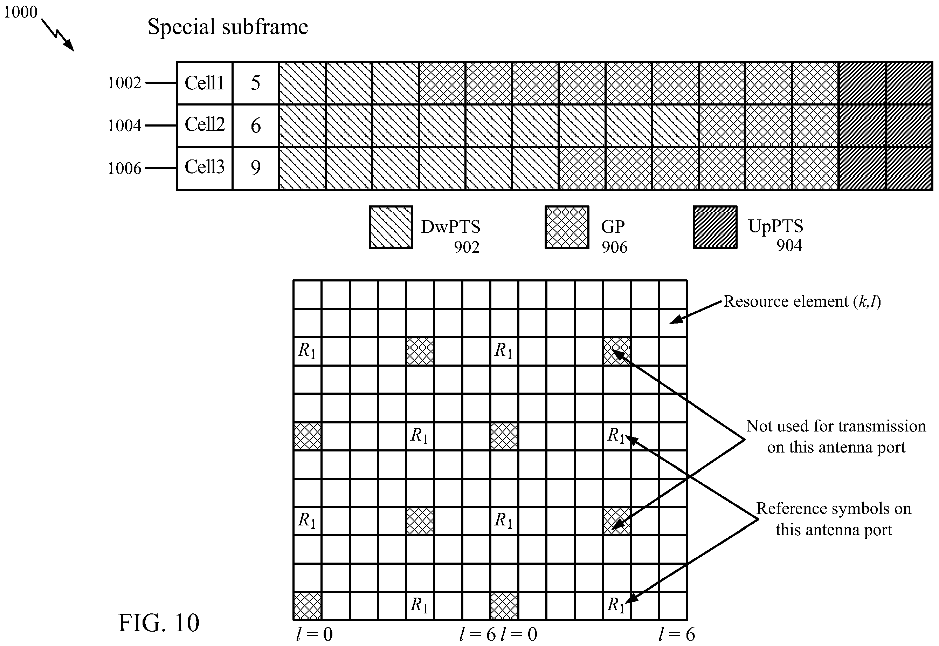

FIG. 10 shows an example of how different cells may be assigned different SSF configurations. In the illustrated example 1000, a first cell 1002 has SSF configuration 5, a second cell 1004 has configuration 6, while a third cell 1006 has configuration 9.

The following procedure may be defined to assign the selected special sub-frame configurations in step 1 to the measurement cells. According to a first option, a time pattern may be defined on when and how the measured eNB and measuring eNB configure the selected special sub-frame configuration. According to another option, a timer may be defined for special sub-frame reconfiguration larger than the X2 delay, in order to allow the measuring eNB to perform measurement in time.

In either case, eNB-eNB interference measurement may be performed based on CRS/CSI-RS measurement of DwPTS of neighbor cells in GPs of serving cells. If the first example SSF configuration described above is used, the cell configured with a short DwPTS 902 measures CRS/CSI-RS of neighbor cells in its guard period. Neighbor cells to the cell with a short DwPTS 902 may be configured with a long DwPTS 902, and neighbor cells can be identified by different CRS/CSI-RS frequency patterns and different CRS/CSI-RS sequences. If the second example SSF configuration is used, all the cells configured with short DwPTS 902 measure CRS/CSI-RS of the neighbor cell in their guard period, and one of the neighbor cells is configured with a long DwPTS.

To help ensure all the cells can measure the eNB-eNB interference, at least two schemes can be used. In one scheme, a time cycle pattern may be defined for the assignment and measurement steps to cyclically configure the SSF configuration for neighbor cells, then all the cells can measure the eNB-eNB interference. In another scheme, configuration pattern may be kept constant while exchanging the eNB measurement results, such as pathloss, with neighbor cells that have the longest DwPTS pattern.

For UE-UE measurement, the same principles described above may be utilized by configuring SSF configurations with different length UpPTSs of neighbor cells. Further, new UpPTS patterns may be designed for UE-UE measurement similar to the DwPTS measurement mechanisms described above. For example, a new SSF of 6 DwPTS time slots, 5 GP time slots, and 3 UpPTS time slots (6:5:3) may be defined, and a 3:10:1/6:5:3 configuration may be used for UE-UE measurement similar to the DwPTS measurement mechanism described above.

According to one technique, blank UL sub-frames may be used for eNB-eNB interference measurement. In this case, for all the cells having to measure eNB-eNB interference, some cells may be configured with relative UL heavy configuration, and configure other cells with relative DL heavy configuration. A procedure may be defined to assign the selected sub-frame configurations to the measurement cells. In some cases, a time pattern may be defined on when and how the measured eNB and measuring eNB configure the selected sub-frame configuration. In other cases, a timer may be defined for sub-frame reconfiguration larger than X2 delay, in order to allow the measuring eNB to perform measurement in time.

In cells configured with relative UL heavy configuration, UL scheduling may be restricted in some of the UL flexible sub-frame and make them UL blank. In these UL blank sub-frames, some cells may measure CRS/CSI-RS of other relative DL heavy configuration cells for eNB-eNB interference measurement.

To help ensure all the cells can measure the eNB-eNB interference, two schemes can be used. In a first case, a time cycle pattern may be assigned to cyclically configure the blank UL sub-frame for neighbor cells, then all the cells can measure the eNB-eNB interference. In a second case, the configuration pattern may be kept constant, while exchanging the eNB measurement result, such as path-loss with neighbor cells.

In some cases, the different techniques may have different impacts regarding standards implementations. For the first technique described above, there may need to be an exchange of the special sub-frame configuration between neighbor cells for eNB-eNB interference measurement or an exchange of eNB-eNB interference measurement results between neighbor cells. eNBs may need to measure the CRS/CSI-RS of other cells during the eNB's guard period.

For the second technique described above, there may need to be an exchange of blank UL sub-frame configurations between neighbor cells, or an exchange of the eNB-eNB interference measurement results between neighbor cells. The eNB may need to measure the CRS/CSI-RS of other cells in the eNB's UL sub-frame.

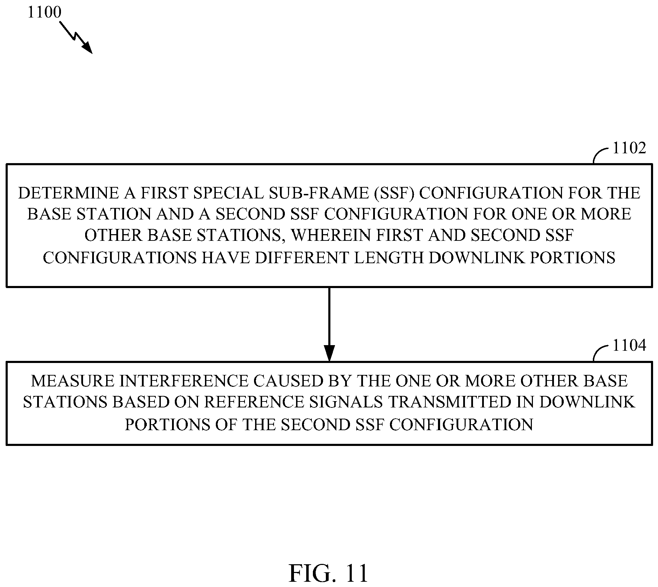

FIG. 11 illustrates example operations 1100 of a method for wireless communications by a base station (BS). The BS may be, for example, one of base station 204 or femto base station 206 illustrated in FIG. 2. The operations 1100 generally include determining, at 1102, a first special sub-frame (SSF) configuration for the base station and a second SSF configuration for one or more other base stations, wherein first and second SSF configurations have different length downlink portions and measuring, at 1104, interference caused by the one or more other base stations based on reference signals transmitted in downlink portions of the second SSF configuration.

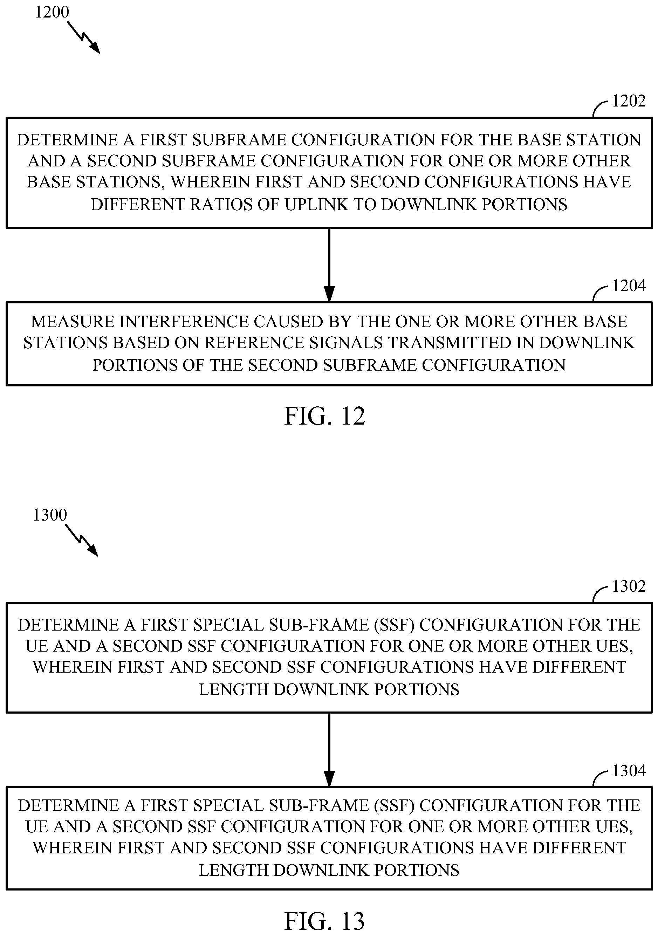

FIG. 12 illustrates example operations 1200 of a method for wireless communications by a base station (BS). The BS may be, for example, one of base station 204 or femto base station 206 illustrated in FIG. 2. The operations 1200 generally include determining, at 1202, a first subframe configuration for the base station and a second subframe configuration for one or more other base stations, wherein first and second configurations have different ratios of uplink to downlink portions and measuring, at 1204, interference caused by the one or more other base stations based on reference signals transmitted in downlink portions of the second subframe configuration.

FIG. 13 illustrates example operations 1300 of a method for wireless communications by a user equipment (UE). The UE, for example, may be one of UEs 206 illustrated in FIG. 2. The operations 1300 generally include determining, at 1302, a first special sub-frame (SSF) configuration for the UE and a second SSF configuration for one or more other UEs, wherein first and second SSF configurations have different length downlink portions and measuring, at 1304, interference caused by the one or more other UEs based on reference signals transmitted in downlink portions of the second SSF configuration.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

As used herein, a phrase referring to "at least one of' a list of items refers to any combination of those items, including single members. As an example, "at least one of: *a, b,* or *c*" is intended to cover: *a, b, c, a-b, a-c, b-c, and a-b-c.*

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software/firmware, middleware, microcode, hardware description language, or otherwise.

Accordingly, in one or more exemplary embodiments, the functions described may be implemented in hardware, software/firmware, or combinations thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

## Claims

1. A method for wireless communication by a base station, BS, (204) comprising:
determining (1202) a first subframe configuration for the base station and a second subframe configuration for one or more other base stations, wherein the first and second subframe configurations have different ratios of uplink to downlink portions, wherein the first and second subframe configurations comprise special subframe, SSF, configurations; and
measuring (1204) interference caused by the one or more other base stations based on reference signals transmitted in downlink portions of the second subframe configuration.

2. The method of claim 1, wherein the first and second subframe configurations are changed periodically to allow different base stations to measure interference caused by other base stations.

3. The method of claim 1, further comprising exchanging the first and second subframe configurations with the one or more other base stations.

4. The method of claim 1, further comprising exchanging reference signal measurements with the one or more other base stations.

5. A method for wireless communication by a user equipment, UE, (206) comprising:
determining (1302) a first special sub-frame, SSF, configuration for the UE and a second SSF configuration for one or more other UEs, wherein the first and second SSF configurations have different length uplink portions; and
measuring (1304) interference caused by the one or more other UEs based on reference signals transmitted in uplink portions of the second SSF configuration.

6. The method of claim 5, wherein the first and second SSF configurations are changed periodically to allow different UEs to measure interference caused by other UEs.

7. The method of claim 5, further comprising receiving signaling of the first and second SSF configurations from a base station.

8. The method of claim 5, further comprising reporting measurements to one or more other base stations.

9. An apparatus for wireless communication by a base station, BS, (204) comprising:
means for determining (1202) a first subframe configuration for the base station and a second subframe configuration for one or more other base stations, wherein the first and second subframe configurations have different ratios of uplink to downlink portions, wherein the first and second subframe configurations comprise special subframe, SSF, configurations; and
means for measuring (1204) interference caused by the one or more other base stations based on reference signals transmitted in downlink portions of the second subframe configuration.

10. The apparatus of claim 9, wherein the first and second subframe configurations are changed periodically to allow different base stations to measure interference caused by other base stations.

11. The apparatus of claim 9, further comprising means for exchanging the first and second subframe configurations with the one or more other base stations.

12. The apparatus of claim 9, further comprising means for exchanging reference signal measurements with one or more other base stations.

13. An apparatus for wireless communication by a user equipment, UE, (206) comprising:
means for determining (1302) a first special sub-frame, SSF, configuration for the UE and a second SSF configuration for one or more other UEs, wherein the first and second SSF configurations have different length uplink portions; and
means for measuring (1304) interference caused by the one or more other UEs based on reference signals transmitted in uplink portions of the second SSF configuration.

14. The apparatus of claim 13, wherein the first and second SSF configurations are changed periodically to allow different UEs to measure interference caused by other UEs.

15. A computer program comprising executable instructions for causing at least one computer to perform a method according to one of the claims 1 to 4 or 5 to 8 when executed.

## Patentansprüche

1. Verfahren zur drahtlosen Kommunikation durch eine Basisstation, BS, (204), umfassend:
Bestimmen (1202) einer ersten Unterrahmenkonfiguration für die Basisstation und einer zweiten Unterrahmenkonfiguration für eine oder mehrere andere Basisstationen, wobei die erste und zweite Unterrahmenkonfiguration verschiedene Verhältnisse von Aufwärtsstrecken- zu Abwärtsstreckenabschnitten aufweisen, wobei die erste und die zweite Unterrahmenkonfiguration Spezialunterrahmen-, SSF, Konfigurationen umfassen; und
Messen (1204) einer Interferenz, die durch die eine oder mehrere andere Basisstationen verursacht wird, basierend auf Referenzsignalen, die in Abwärtsstreckenabschnitten der zweiten Unterrahmenkonfiguration übertragen werden.

2. Verfahren nach Anspruch 1, wobei die erste und zweite Unterrahmenkonfiguration periodisch geändert werden, um es verschiedenen Basisstationen zu ermöglichen, eine durch andere Basisstationen verursachte Interferenz zu messen.

3. Verfahren nach Anspruch 1, ferner umfassend Austauschen der ersten und zweiten Unterrahmenkonfiguration mit der einen oder den mehreren anderen Basisstationen.

4. Verfahren nach Anspruch 1, ferner umfassend Austauschen von Referenzsignalmessungen mit der einen oder den mehreren anderen Basisstationen.

5. Verfahren zur drahtlosen Kommunikation durch ein Benutzergerät, UE, (206), umfassend:
Bestimmen (1302) einer ersten Spezialunterrahmen-, SSF, Konfiguration für das UE und einer zweiten SSF-Konfiguration für ein oder mehrere andere UEs, wobei die erste und die zweite SSF-Konfiguration Aufwärtsstreckenabschnitte unterschiedlicher Länge aufweisen; und
Messen (1304) einer Interferenz, die durch das eine oder die mehreren anderen UEs verursacht werden, basierend auf Referenzsignalen, die in Aufwärtsstreckenabschnitten der zweiten SSF-Konfiguration übertragen werden.

6. Verfahren nach Anspruch 5, wobei die erste und die zweite SSF-Konfiguration periodisch geändert werden, um es verschiedenen UEs zu ermöglichen, eine durch andere UEs verursachte Interferenz zu messen.

7. Verfahren nach Anspruch 5, ferner umfassend Empfangen einer Signalisierung der ersten und zweiten SSF-Konfiguration von einer Basisstation.

8. Verfahren nach Anspruch 5, ferner umfassend Berichten von Messungen an eine oder mehrere andere Basisstationen.

9. Vorrichtung zur drahtlosen Kommunikation durch eine Basisstation, BS, (204), umfassend:
Mittel zum Bestimmen (1202) einer ersten Unterrahmenkonfiguration für die Basisstation und einer zweiten Unterrahmenkonfiguration für eine oder mehrere andere Basisstationen, wobei die erste und zweite Unterrahmenkonfiguration verschiedene Verhältnisse von Aufwärtsstrecken- zu Abwärtsstreckenabschnitten aufweisen, wobei die erste und die zweite Unterrahmenkonfiguration Spezialunterrahmen-, SSF, Konfigurationen umfassen; und
Mittel zum Messen (1204) einer Interferenz, die durch die eine oder mehrere andere Basisstationen verursacht wird, basierend auf Referenzsignalen, die in Abwärtsstreckenabschnitten der zweiten Unterrahmenkonfiguration übertragen werden.

10. Vorrichtung nach Anspruch 9, wobei die erste und zweite Unterrahmenkonfiguration periodisch geändert werden, um es verschiedenen Basisstationen zu ermöglichen, eine durch andere Basisstationen verursachte Interferenz zu messen.

11. Vorrichtung nach Anspruch 9, ferner umfassend Mittel zum Austauschen der ersten und zweiten Unterrahmenkonfiguration mit der einen oder den mehreren anderen Basisstationen.

12. Vorrichtung nach Anspruch 9, ferner umfassend Mittel zum Austauschen von Referenzsignalmessungen mit der einen oder den mehreren anderen Basisstationen.

13. Vorrichtung zur drahtlosen Kommunikation durch ein Benutzergerät, UE, (206), umfassend:
Mittel zum Bestimmen (1302) einer ersten Spezialunterrahmen-, SSF, Konfiguration für das UE und einer zweiten SSF-Konfiguration für ein oder mehrere andere UEs, wobei die erste und die zweite SSF-Konfiguration Aufwärtsstreckenabschnitte unterschiedlicher Länge aufweisen; und
Mittel zum Messen (1304) einer Interferenz, die durch das eine oder die mehreren anderen UEs verursacht werden, basierend auf Referenzsignalen, die in Aufwärtsstreckenabschnitten der zweiten SSF-Konfiguration übertragen werden.

14. Vorrichtung nach Anspruch 13, wobei die erste und die zweite SSF-Konfiguration periodisch geändert werden, um es verschiedenen UEs zu ermöglichen, eine durch andere UEs verursachte Interferenz zu messen.

15. Computerprogramm, das ausführbare Anweisungen umfasst, um zu veranlassen, dass mindestens ein Computer ein Verfahren nach einem der Ansprüche 1 bis 4 oder 5 bis 8 ausführt, wenn sie ausgeführt werden.

## Revendications

1. Procédé de communication sans fil par une station de base, BS, (204) comprenant :
la détermination (1202) d'une première configuration de sous-trame pour la station de base et d'une seconde configuration de sous-trame pour une ou plusieurs autres stations de base, dans lequel les première et seconde configurations de sous-trame ont différents rapports portions de liaison montante sur portions de liaison descendante, dans lequel les première et seconde configurations de sous-trame comprennent des configurations de sous-trame spéciale, SSF ; et
la mesure (1204) d'interférences causées par les une ou plusieurs autres stations de base sur la base de signaux de référence transmis dans des portions de liaison descendante de la seconde configuration de sous-trame.

2. Procédé selon la revendication 1, dans lequel les première et seconde configurations de sous-trame sont changées périodiquement pour permettre à différentes stations de base de mesurer des interférences causées par d'autres stations de base.

3. Procédé selon la revendication 1, comprenant en outre l'échange des première et seconde configurations de sous-trame avec les une ou plusieurs autres stations de base.

4. Procédé selon la revendication 1, comprenant en outre l'échange de mesures de signal de référence avec les une ou plusieurs autres stations de base.

5. Procédé de communication sans fil par un équipement d'utilisateur, UE, (206) comprenant :
la détermination (1302) d'une première configuration de sous-trame spéciale, SSF, pour l'UE et une seconde configuration de SSF pour un ou plusieurs autres UE, dans lequel les première et seconde configurations de SSF ont des portions de liaison montante de différentes longueurs ; et
la mesure (1304) des interférences causées par les un ou plusieurs autres UE sur la base de signaux de référence transmis dans des portions de liaison montante de la seconde configuration de SSF.

6. Procédé selon la revendication 5, dans lequel les première et seconde configurations de SSF sont changées périodiquement pour permettre à différents UE de mesurer des interférences causées par d'autres UE.

7. Procédé selon la revendication 5, comprenant en outre la réception d'une signalisation des première et seconde configurations de SSF depuis une station de base.

8. Procédé selon la revendication 5, comprenant en outre le rapport de mesure à une ou plusieurs autres stations de base.

9. Appareil pour des communications sans fil par une station de base, BS, (204) comprenant :
un moyen pour déterminer (1202) une première configuration de sous-trame pour la station de base et une seconde configuration de sous-trame pour une ou plusieurs autres stations de base, dans lequel les première et seconde configurations de sous-trame ont différents rapports portions de liaison montante sur portions de liaison descendante, dans lequel les première et seconde configurations de sous-trame comprennent des configurations de sous-trame spéciale, SSF ; et
un moyen pour mesurer (1204) des interférences causées par les une ou plusieurs autres stations de base sur la base de signaux de référence transmis dans des portions de liaison descendante de la seconde configuration de sous-trame.

10. Appareil selon la revendication 9, dans lequel les première et seconde configurations de sous-trame sont changées périodiquement pour permettre à différentes stations de base de mesurer des interférences causées par d'autres stations de base.

11. Appareil selon la revendication 9, comprenant en outre moyen pour échanger les première et seconde configurations de sous-trame avec les une ou plusieurs autres stations de base.

12. Appareil selon la revendication 9, comprenant en outre moyen pour échanger des mesures de signaux de référence avec une ou plusieurs autres stations de base.

13. Appareil pour des communications sans fil par un équipement d'utilisateur, UE, (206) comprenant :
un moyen pour déterminer (1302) une première configuration de sous-trame spéciale, SSF, pour l'UE et une seconde configuration de SSF pour un ou plusieurs autres UE, dans lequel les première et seconde configurations de SSF ont des portions de liaison montante de différentes longueurs ; et
un moyen pour mesurer (1304) des interférences causées par les un ou plusieurs autres UE sur la base de signaux de référence transmis dans des portions de liaison montante de la seconde configuration de SSF.

14. Appareil selon la revendication 13, dans lequel les première et seconde configurations de SSF sont changées périodiquement pour permettre à différents UE de mesurer des interférences causées par d'autres UE.

15. Programme d'ordinateur comprenant des instructions exécutables pour amener au moins un ordinateur à réaliser un procédé selon l'une quelconque des revendications 1 à 4 ou 5 à 8 lorsqu'elles sont exécutées.
